# EUROPEAN PATENT APPLICATION

(11) **EP 4 834 578 A1**
(43) Date of publication of application: **04.11.2026**
(21) Application number: 24912753.1
(22) Date of filing: 23.12.2024
(51) Int. Cl.: B32B 7/022, B32B 5/24, B32B 27/12, B32B 27/30, C09D 5/14, C09D 7/61, C09D 133/00, C09D 201/00

(54) **FIBER ASSEMBLY**

(30) Priority: 27.12.2023 JP 2023220349
(71) Applicant: NBC Meshtec Inc., Hino-shi, Tokyo 191-0053 (JP)
(72) Inventor: NAMIKAWA Hideyuki, Hino-shi, Tokyo 191-0053 (JP); TAKAMORI Mayuko, Hino-shi, Tokyo 191-0053 (JP); NAGAO Tomokazu, Hino-shi, Tokyo 191-0053 (JP)
(74) Representative: J A Kemp LLP
(86) International application number: PCT/JP2024/045532
(87) International publication number: WO 2025/142866

(57) **Abstract**

[Problem]

To provide a new technology that is less likely to cause defects due to rubbing of a coating film on the surface of a woven fabric, a knitted fabric, or a non-woven fabric. [Solution] This fiber assembly has a surface in which at least a portion thereof is coated. The fiber assembly is characterized by having a base material that is formed of a woven fabric, a knitted fabric, or a non-woven fabric, and a coating film that covers at least a portion of the surface of the base material, and is characterized in that the Martens hardness of the coating film measured at a maximum indentation depth of 100 nm or less is not less than 200 N/mm² but less than 230 N/mm².

## Description

### Technical Field

The present invention relates to a fiber assembly having a coating film.

### Background Art

In order to impart functions such as antimicrobial properties and dust-proof properties to a mesh substrate such as a filter, a coating film may be formed with a resin composition containing a functional material and fixed to a mesh surface. The coating film is required to have a certain hardness in order not to be broken or peeled by an external force such as rubbing. A pencil hardness test is frequently used for a film substrate or the like as an index of coating film hardness. However, in textile products such as a mesh, the application width of the coating film to be formed on the fiber is narrow, and it is therefore impossible to evaluate the coating film hardness by pencil hardness. In order to apply a coating resistant to rubbing, it is necessary to measure the coating film hardness in a minute area. However, the coating film has not been conventionally designed by directly measuring the coating film hardness on a fiber. Therefore, the developers have usually determined the resin configuration through trial and error by their intuition.

The coating film hardness in a minute area can be measured as Martens hardness with an ultra micro hardness tester, and the measurement standard is specified in ISO14577-1. Patent Literature 1 discloses a laminated film in which a coating film formed on a film substrate has a Martens hardness of 0.300 GPa or more and 0.65 GPa or less at an indentation depth of 100 nm and a Martens hardness of 0.15 GPa or more and 0.35 GPa or less at an indentation depth of 2000 nm.

### Citation List

### Patent Literature

Patent Literature 1: JP 2023-126785 A

### Summary of Invention

### Technical Problem

The present invention provides a novel technique that can suppress defects due to rubbing of a coating film on a surface of a woven fabric, a knitted fabric, or a nonwoven fabric.

### Solution to Problem

Even when a coating film having the same configuration as a coating film having a strength that does not cause peeling or the like on a film substrate is formed on a woven fabric, a knitted fabric, or a nonwoven fabric, the coating film is not necessarily prevented from being peeled or the like. This is considered to be the following reasons: the curing condition, for example, the irradiation state of the active energy ray is not necessarily the same between the coating film on the film and the coating film on the fiber such as a woven fabric, so that the crosslinked state of the coating film on the film substrate is different from that on the fiber; and the application of the external force is different between the film and the fiber, so that the ease of occurrence of coating film breakage and the like is different. Therefore, in the case of a substrate that is easily bent or sheared and deformed like a woven fabric or the like, expected effects may not be obtained even when a resin composition of the coating film effective to a film-shaped substrate is applied to such a substrate.

As a result of intensive studies, the present inventors have found that when the coating film hardness on the surface of the fibers constituting a woven fabric or the like is set within a predetermined range, it is possible to suppress defects of the coating film due to rubbing.

The gist of the present invention is as follows.
[1] A fiber assembly in which at least a part of a surface of the fiber assembly is coated,
   the fiber assembly including:
   a substrate made of a woven fabric, a knitted fabric, or a nonwoven fabric; and
   a coating film covering at least a part of the surface of the substrate, wherein
   a Martens hardness of the coating film measured at a maximum indentation depth of 100 nm or less is 200 N/mm² or more and less than 230 N/mm².
[2] The fiber assembly according to [1], wherein the coating film contains a functional agent.
[3] The fiber assembly according to [2], wherein the functional agent is an inorganic material.
[4] The fiber assembly according to [2], wherein the functional agent is an antimicrobial agent and/or an antiviral agent.
[5] The fiber assembly according to any one of [1] to [4], wherein the coating film contains an acrylic resin.
[6] The fiber assembly according to any one of [1] to [4], wherein the coating film has a thickness of less than 500 nm.
[7] A method for enhancing strength against rubbing of a coating film formed on a woven fabric, a knitted fabric, or a nonwoven fabric, the method including setting a composition of a resin constituting the coating film such that a Martens hardness measured at a maximum indentation depth of 100 nm or less of the coating film is 200 N/mm² or more and less than 230 N/mm².

### Advantageous Effects of Invention

According to the present invention, it is possible to provide a novel technique that can suppress defects due to rubbing of a coating film on a surface of a woven fabric, a knitted fabric, or a nonwoven fabric.

### Brief Description of Drawings

[Fig. 1] Fig. 1 is an SEM photograph before a rubbing test of a coated mesh of Example 1.
[Fig. 2] Fig. 2 is an SEM photograph after a rubbing test of the coated mesh of Example 1.
[Fig. 3] Fig. 3 is an SEM photograph before a rubbing test of a coated mesh of Comparative Example 1.
[Fig. 4] Fig. 4 is an SEM photograph after a rubbing test of the coated mesh of Comparative Example 1.
[Fig. 5] Fig. 5 is an SEM photograph before a rubbing test of a coated mesh of Comparative Example 2.
[Fig. 6] Fig. 6 is an SEM photograph after a rubbing test of the coated mesh of Comparative Example 2.

### Description of Embodiments

Hereinafter, embodiments of the present invention will be described. In the fiber assembly of the present embodiment, at least a part of the surface thereof is coated, and the fiber assembly of the present embodiment includes: a woven fabric, a knitted fabric, or a nonwoven fabric (hereinafter, also referred to as a substrate such as a woven fabric) as a substrate; and a coating film formed on the surface of the substrate such as a woven fabric. In the fiber assembly of the present embodiment, the Martens hardness of the coating film measured at a maximum indentation depth of 100 nm or less is 200 N/mm² or more and less than 230 N/mm².

In the present specification, the fiber assembly means a structure formed by assembling a plurality of fibers.

### (Substrate such as woven fabric)

The substrate such as a woven fabric in the present embodiment is a woven fabric in which fibers are woven into a predetermined woven structure, a knitted fabric in which fibers are knitted into a predetermined knitted structure, or a nonwoven fabric in which fibers are randomly entangled. The material thereof is not particularly limited as long as a coating film can be formed on the surface of the woven fabric or the like. Examples of the material of the woven fabric or the like include organic fibers formed from various resins and inorganic fibers formed from inorganic materials such as glass, ceramics, and metal. Examples of the organic fibers include synthetic fibers as exemplified below, and natural fibers such as cotton, hemp, and silk. The woven fabric or the like may be formed from one kind or a combination of two or more kinds of these, or may be formed from fibers consisting of a surface layer portion and a central portion which are made of different materials.

Examples of the resin that can constitute organic fibers include thermoplastic resins such as polyethylene resin, polypropylene resin, polystyrene resin, ABS resin, AS resin, EVA resin, polymethylpentene resin, polyvinyl chloride resin, polyvinylidene chloride resin, polymethyl acrylate resin, polyvinyl acetate resin, polyamide resin, polyimide resin, polycarbonate resin, polyethylene terephthalate resin, polybutylene terephthalate resin, polyacetal resin, polyarylate resin, polysulfone resin, polyvinylidene fluoride resin, Vectran (registered trademark), and PTFE; biodegradable resins such as polylactic acid resin, polyhydroxybutyrate resin, modified starch resin, polycaprolactone resin, polybutylene succinate resin, polybutylene adipate terephthalate resin, polybutylene succinate terephthalate resin, and polyethylene succinate resin; thermosetting resins such as phenol resin, urea resin, melamine resin, unsaturated polyester resin, diallyl phthalate resin, epoxy resin, epoxy acrylate resin, acrylic urethane resin, and urethane resin; elastomers such as polystyrene elastomers, polyethylene elastomers, polypropylene elastomers, and polyurethane elastomers; and natural resins such as lacquer. Examples of the material of the inorganic fibers include glass, carbon, and metal, and as the metal, materials known to those skilled in the art such as stainless steel, iron, nickel, chromium, copper, and various alloys can be used.

### (Coating film, resin composition)

The coating film of the present embodiment covers at least a part of the substrate surface. The coating film of the present embodiment can be formed of, for example, a resin composition.

Specifically, the coating film can be obtained by crosslinking and curing a composition containing at least one selected from the group consisting of thermosetting or active energy ray-curable monomers and polymers on the surface of a substrate such as a woven fabric by heating or irradiation with an active energy ray, or a combination of heating and irradiation with an active energy ray. The active energy ray is not particularly limited, and examples thereof include an ultraviolet ray, an electron beam, and ionizing radiation such as an α ray, a β ray, and a γ ray. Hereinafter, a thermosetting or active energy ray-curable monomer may be collectively referred to as a curable monomer, a thermosetting or active energy ray-curable polymer may be collectively referred to as a curable polymer, and a curable monomer and a curable polymer may be collectively referred to as a curable resin.

The coating film of the present embodiment has a Martens hardness of 200 N/mm² or more and less than 230 N/mm² as measured at a maximum indentation depth of 100 nm or less as described above, but the Martens hardness of the coating film can be adjusted by controlling the type, blending ratio, and the like of the curable resin.

When the coating film includes a plurality of coating layers, the resin compositions that form the respective layers may be the same or different.

### <Curable polymer>

A curable polymer is a polymer containing a curable functional group.

The curable polymer also includes a so-called oligomer region, and the weight average molecular weight thereof is 500 or more. From the viewpoint of increasing the coating film hardness, the weight average molecular weight of the curable polymer is preferably 5,000 or more, and more preferably 10,000 or more. From the viewpoint of ease of coating and forming, the weight average molecular weight of the curable polymer may be 200,000 or less, preferably 100,000 or less, and more preferably 80,000 or less.

The curable polymer includes a polymer chain including a carbon-carbon bond, an ether bond, a urea bond, an ester bond, a urethane bond, a siloxane bond, or the like as a main chain, and includes a curable functional group as a side chain or a terminal group. The curable functional group is a functional group capable of forming a crosslink with polymers by chemical bonding, and corresponds to curable functional groups known to those skilled in the art, such as a vinyl group, an ethynyl group, an epoxy group, an amino group, a hydroxyl group, a carboxyl group, an acid anhydride, a methylol group, and a silanol group. The curable polymer may be an organic polymer or an inorganic polymer. From the viewpoint of transparency, a polymer chain including a carbon-carbon bond is preferable, and from the viewpoint of shapability, a polymer chain including a urethane bond is preferable.

The number of curable functional groups is preferably 2 or more, more preferably 3 or more, and particularly preferably 5 or more. The type of the curable functional group is not particularly limited, but a vinyl group, particularly an acryloyl group or a methacryloyl group is preferable in view of ease of polymerization.

Specific examples of the preferable curable polymer include a urethane (meth)acrylate polymer and an acrylic (meth)acrylate polymer.

The urethane (meth)acrylate polymer can be prepared, for example, by (1) a method of conducting addition reaction of a compound having a hydroxyl group and an acryloyl group (or a methacryloyl group) to a polyisocyanate compound having a terminal isocyanate group in the molecule, or (2) a method of reacting an isocyanate group-containing (meth)acrylate monomer with a polyurethane polyol obtained by reacting a polyisocyanate compound with a polyol.

Examples of the polyisocyanate compound include divalent or trivalent polyisocyanate compounds such as 2,4-tolylene diisocyanate, 2,6-tolylene diisocyanate, 1,3-xylene diisocyanate, 1,4-xylene diisocyanate, xylylene diisocyanate, 1,5-naphthalene diisocyanate, m-phenylene diisocyanate, p-phenylene diisocyanate, diphenylmethane diisocyanate, 4,4'-diphenylmethane diisocyanate, 4,4'-dibenzyl diisocyanate, isophorone diisocyanate, hexamethylene diisocyanate, dicyclohexylmethane diisocyanate, 2,2,4-trimethylhexamethylene diisocyanate, and 2,4,4-trimethylhexamethylene diisocyanate, or diisocyanate compounds obtained by hydrogenating aromatic isocyanates among these diisocyanate compounds (for example, diisocyanate compounds such as hydrogenated xylylene diisocyanate and hydrogenated diphenylmethane diisocyanate), triphenylmethane triisocyanate, and dimethylene triphenyl triisocyanate, biuret type adducts and isocyanurate ring type adducts of these diisocyanates.

Examples of the compound having a hydroxyl group and an acryloyl group (or a methacryloyl group) in the method (1) include pentaerythritol tri(meth)acrylate, dipentaerythritol penta(meth)acrylate, 2-hydroxyethyl (meth)acrylate, and glycerol di(meth)acrylate, and alkylene oxide-modified or lactone-modified compounds obtained by adding ethylene oxide, propylene oxide, ε-caprolactone, γ-butyrolactone, or the like to these compounds.

Examples of the polyol in the above method (2) include ethylene glycol, propylene glycol, butylene glycol, neopentyl glycol, 1,6-hexanediol, trimethylolpropane, glycerin, pentaerythritol, polycaprolactone diol, polyester polyol, and polyether polyol.

Examples of the isocyanate group-containing (meth)acrylate monomer in the above method (2) include unsaturated compounds obtained by adding a polyisocyanate compound such as hexamethylene diisocyanate to an active hydrogen-containing polymerizable monomer such as isocyanate ethyl acrylate, isocyanate propyl acrylate, and hydroxyethyl acrylate.

The urethane (meth)acrylate polymer may be a urethane urea (meth)acrylate polymer having a urea bond. The urethane urea (meth)acrylate polymer can be prepared, for example, by using a polyamine in combination with the polyol in the above method (2).

The acrylic (meth)acrylate polymer is an acrylic polymer containing an acryloyl group and/or a methacryloyl group. Specific examples thereof include a compound obtained by adding (meth)acrylic acid to an acrylic resin copolymerized with glycidyl methacrylate, a compound obtained by adding 2-hydroxyethyl (meth)acrylate, 4-hydroxybutyl (meth)acrylate, pentaerythritol tri(meth)acrylate, or the like to an acrylic resin copolymerized with 2-acryloyloxyethyl isocyanate, and a resin obtained by adding 2-acryloyloxyethyl isocyanate to an acrylic resin copolymerized with a hydroxyl group-containing monomer.

The polymers can be used singly or in combination of two or more kinds thereof.

As the curable polymer, a commercially available product may be used. Examples of commercially available urethane (meth)acrylate oligomers or polymers that can be used include DPHA-40H, UX-5000, UX-5102D20, UX-5103D, UX-5005, UX-3204, UX-4101, UXT-6100, UX-6101, UX-8101, UX-0937, UXF-4001-M3, and UXF-4002 manufactured by Nippon Kayaku Co., Ltd.; UF-8001G, and UA-510H manufactured by Kyoeisha Chemical Co., Ltd.; EBECRYL244, EBECRYL284, EBECRYL8402, EBECRYL8807, EBECRYL264, EBECRYL265, EBECRYL9260, EBECRYL8701, EBECRYL8405, EBECRYL1290, EBECRYL5129, EBECRYL220, KRM8200, KRM7804, and KRM8452 manufactured by Daicel-Allnex Ltd.; UV-1700B, UV-600B, UV-7600B, UV-7640B, UV-7650B, UV-3520EA, UV-7000B, and SHIKOH UV-AF305A manufactured by Mitsubishi Chemical Corporation.; CN-9001, CN-9004, CN-9005, CN-965, CN-9178, CN-9893, CN-9782, CN-964, CN-9013, and CN-9010 manufactured by Arkema S.A.; U-10PA, U-10HA, UA-33A, UA-53H, UA-32P, U-15HA, UA-122P, UA-160TM, UA-31F, UA-7100, UA-4200, and UA-4400 manufactured by Shin-Nakamura Chemical Co., Ltd.; ART RESIN UN-3320HA, ART RESIN UN-3320HB, ART RESIN UN-3320HC, ART RESIN UN-3320HS, ART RESIN H-7M40, ART RESIN UN-904, ART RESIN UN-904M, ART RESIN UN-901T, ART RESIN UN-905, ART RESIN UN-951, ART RESIN UN-952, ART RESIN UN-953, ART RESIN UN-954, ART RESIN UN-906, ART RESIN UN-906S, ART RESIN UN-907, ART RESIN UN-908, ART RESIN UN-333, ART RESIN UN-5507, ART RESIN UN-6300, ART RESIN UN-6301, ART RESIN UN-7600, ART RESIN UN-7700, ART RESIN UN-9000PEP, ART RESIN UN-9200, ART RESIN UN-904UREA, and ART RESIN UN-H7UREA manufactured by Negami Chemical Industrial Co., Ltd.

Examples of commercially available acrylic (meth)acrylate oligomers or polymers that can be used include UNIDIC V-6840, UNIDIC V-6841, UNIDIC V-6850, UNIDIC EMS-635, and UNIDIC WHV-649 manufactured by DIC Corporation; HITALOID 7975, HITALOID 7977, HITALOID 7988, and HITALOID 7975D manufactured by Hitachi Chemical Company, Ltd.; ART CURE RA-3969MP, ART CURE RA-3960PG, ART CURE RA-3602MI, ART CURE OAP-5000, ART CURE OAP-2511, ART CURE AHC-9202MI80, ART CURE RA-3704MB, ART CURE RA-3953MP, ART CURE RA-4101, ART CURE MAP-4000, and ART CURE MAP2801 manufactured by Negami Chemical Industrial Co., Ltd.

### <Curable monomer>

The curable monomer is a monomer containing the above-described curable functional group.

The molecular weight of the curable monomer is not particularly limited, but may be about 500 or less. The curable functional group equivalent of the curable monomer may be 50 g/eq. or more and 200 g/eq. or less.

The curable monomer has preferably 2 or more, more preferably 3 or more, and particularly preferably 5 or more curable functional groups. In order to adjust the crosslinking density, a resin having only one functional group of the same type as the curable functional group may be contained in the curable resin composition. Preferable examples of the curable functional group include an acryloyl group and a methacryloyl group. A preferred curable monomer is a polyfunctional (meth)acrylate monomer.

The polyfunctional (meth)acrylate monomer can be prepared by a dehydration reaction between a polyhydric alcohol and (meth)acrylic acid or a transesterification reaction between a polyhydric alcohol and a (meth)acrylic acid ester.

Examples of the polyfunctional (meth)acrylate monomer having a curable functional group equivalent of 50 g/eq. or more and 200 g/eq. or less include bifunctional (meth)acrylate monomers such as ethylene glycol di(meth)acrylate, 1,6-hexanediol di(meth)acrylate, polyethylene glycol (200) di(meth)acrylate, allyl (meth)acrylate, 1,4-butanediol di(meth)acrylate, neopentyl glycol di(meth)acrylate, dioxane glycol di(meth)acrylate, ethoxylated (2) bisphenol A di(meth)acrylate, ethoxylated (3) bisphenol A di(meth)acrylate, ethoxylated (4) bisphenol A (meth)acrylate, ethoxylated (10) bisphenol A di(meth)acrylate, propoxylated (3) bisphenol A di(meth)acrylate, tricyclodecane dimethanol di(meth)acrylate, and 9,9-bis[4-(2-hydroxyethoxy)phenyl]fluorene di(meth)acrylate; trifunctional (meth)acrylate monomers such as glycerin tri(meth)acrylate, trimethylolpropane tri(meth)acrylate, ethoxylated (3) trimethylolpropane triacrylate, ethoxylated (6) trimethylolpropane triacrylate, ethoxylated (9) trimethylolpropane triacrylate, propoxylated (3) trimethylolpropane triacrylate, propoxylated (6) trimethylolpropane triacrylate, propoxylated (9) trimethylolpropane triacrylate, pentaerythritol tri(meth)acrylate, ethoxylated (4) pentaerythritol tri(meth)acrylate, ethoxylated (8) pentaerythritol tri(meth)acrylate, tris(2-hydroxyethyl)isocyanurate tri(meth)acrylate, caprolactone-modified (1) tris(2-hydroxyethyl)isocyanurate tri(meth)acrylate, and caprolactone-modified (3) tris(2-hydroxyethyl)isocyanurate tri(meth)acrylate; tetrafunctional (meth)acrylate monomers such as pentaerythritol tetra(meth)acrylate, dipentaerythritol tetra(meth)acrylate, tripentaerythritol tetra(meth)acrylate, ditrimethylolpropane tetra(meth)acrylate, ethoxylated (4) pentaerythritol tetra(meth)acrylate, and ethoxylated (8) pentaerythritol tetra(meth)acrylate; pentafunctional (meth)acrylate monomers such as dipentaerythritol penta(meth)acrylate and tripentaerythritol penta(meth)acrylate; hexafunctional (meth)acrylate monomers such as dipentaerythritol hexa(meth)acrylate and tripentaerythritol hexa(meth)acrylate; and hepta- or higher (meth)acrylate monomers such as tripentaerythritol hepta(meth)acrylate and tripentaerythritol octa(meth)acrylate.

The curable monomers may be used singly or in combination of two or more kinds thereof.

### <Non-curable polymer>

The resin composition may contain a non-curable polymer. When the resin composition contains the non-curable polymer, the flexibility is enhanced to suppress defects of the coating film in the case where the fiber assembly of the present embodiment is bent and used.

The non-curable polymer is a thermoplastic polymer that does not include a curable functional group and does not cause cross-linking due to chemical bonding with other polymers.

The weight average molecular weight of the non-curable polymer is preferably 5,000 or more, and more preferably 10,000 or more. The weight average molecular weight of the non-curable polymer is preferably 200,000 or less, more preferably 100,000 or less, and still more preferably 80,000 or less because the non-curable polymer is not dissolved in the coating solvent or the viscosity of the coating solution increases to make coating difficult.

Examples of the non-curable polymer include urethane resins, acrylic resins, polyester resins, and polyolefin resins. From the viewpoint of affinity with the curable resins described above, an acrylic resin is preferable.

In the resin composition, the content of the curable resin can be at least 5 mass% or more with respect to the total amount of the curable polymer and the non-curable polymer. The ratio between the curable polymer and the curable monomer in the curable resin may be freely set as long as the Martens hardness after curing falls within a predetermined range, but the curable monomer is preferably contained in an amount of 5 mass% or more with respect to the total amount of the curable polymer and the curable monomer. The number of the curable functional groups in the resin composition is desirably 0.12 mol or more and 0.32 mol or less per 100 g of the resin component. The number of curable functional groups in the resin composition can be calculated from the molecular weight of the curable resin, the number of functional groups, and the blending amount of the curable resin.

### <Polymerization initiator>

The resin composition can contain a polymerization initiator or a curing catalyst depending on the type of the resin to be formed and the polymerization method to be applied. Hereinafter, the polymerization initiator and the curing catalyst may be collectively referred to as a curing initiator. The blending amount of the curing initiator is preferably 0.01 parts by mass or more and 10 parts by mass or less, and more preferably 1 part by mass or more and 10 parts by mass or less with respect to 100 parts by mass of the resin component.

As the curing initiator, a polymerization initiator or a curing catalyst known to those skilled in the art can be used.

When curing is performed by radical polymerization, for example, azo compounds such as 2,2'-azobis(isobutyronitrile), 2,2'-azobis(2-methylbutyronitrile), and 2,2'-azobis(2-methylpropionamidine) dihydrochloride; organic peroxides including benzoyl peroxide, dicumyl peroxide, dialkyl peroxycarbonates such as diisopropyl peroxydicarbonate and di-sec-butyl peroxydicarbonate, peroxyesters such as t-butyl peroxyisobutyrate and t-butyl peroxypivalate, and dialkyl peroxides such as di-t-butyl peroxide; and inorganic peracid compounds such as ammonium salts, potassium salts, and sodium salts of persulfuric acid, perboric acid, perchloric acid, perphosphoric acid, and percarbonic acid can also be used.

When photopolymerization is performed, for example, an alkylphenone-based photopolymerization initiator, an acylphosphine oxide-based photopolymerization initiator, a titanocene-based photopolymerization initiator, an oxime ester-based polymerization initiator, and a photocationic polymerization initiator can be used.

Examples of the alkylphenone-based photopolymerization initiator include 2,2-dimethoxy-1,2-diphenylethan-1-one, 1-hydroxy-cyclohexyl-phenyl-ketone, 2-hydroxy-2 methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone.

Examples of the acylphosphine oxide-based photopolymerization initiator include monoacylphosphine oxides such as 2,4,6-trimethylbenzoyl-diphenyl-phosphine oxide, 2,4,6-triethylbenzoyldiphenylphosphine oxide, and 2,4,6-triphenylbenzoyldiphenylphosphine oxide; and bisacylphosphine oxides such as bis(2,4,6-trimethylbenzoyl)-phenylphosphine oxide, and bis-(2,6-dimethoxybenzoyl)-2,4,4-trimethylpentylphosphine oxide.

Examples of the titanocene-based photopolymerization initiator include bis(η5-2,4-cyclopentadien-1-yl)-bis(2,6-difluoro-3-(1H-pyrrole-1-yl)-phenyl)titanium. Examples of the oxime ester-based polymerization initiator include 1.2-octanedione,1-[4-(phenylthio)-2-(O-benzoyloxime)], ethanone,1-[9-ethyl-6-(2-methylbenzoyl)-9H-carbazol-3-yl]-1-(0-acetyloxime), oxyphenylacetic acid 2-[2-oxo-2-phenylacetoxyethoxy]ethyl ester, and 2-(2-hydroxyethoxy)ethyl ester.

As the photocationic polymerization initiator, for example, photocationic polymerization initiators known to those skilled in the art, such as a sulfonium salt-based polymerization initiator such as UVI-6992 (manufactured by Dow), CPI-100P (manufactured by San-Apro Ltd.), and SP-150 (manufactured by ADEKA Corporation) and an iodonium salt-based polymerization initiator of IRGACURE250 (manufactured by BASF SE) can be used.

The polymerization initiator may be used singly or in combination of two or more kinds thereof.

As described later, curing can be performed by heating or irradiation with an active energy ray. The thermal curing may be performed at a temperature known to those skilled in the art at which the curable functional group reacts at a temperature equal to or lower than a temperature at which the woven fabric substrate is not deformed. When active energy ray irradiation is performed, irradiation may be performed with an irradiation amount known to those skilled in the art, at which the curable functional group sufficiently reacts.

When curing is performed by electron beam irradiation, addition of the polymerization initiator and the curing catalyst is eliminated, which is preferable.

A functional agent can be added to the resin composition in addition to the above-described resin components. The type of the functional agent is not particularly limited, and may be appropriately selected according to a function to be imparted. Examples of the functional agent include a pigment, a dye, a fluorescent agent, an ultraviolet absorber, an antistatic agent, an antimicrobial agent, an antiviral agent, and an antifungal agent, and a plurality of them may be used in combination.

Examples of the pigment include zinc white, white lead, lithopone, titanium dioxide, precipitated barium sulfate, red lead, iron oxide, potassium ferrocyanide, and carbon black. Examples of the ultraviolet absorber include octyl methoxycinnamate, octyl PABA dimethyl, and t-butyl methoxydibenzoylmethane. Examples of the antistatic agent include anionic surfactants and cationic surfactants. Examples of the antimicrobial agent and the antiviral agent include organic compounds or inorganic compounds containing silver or copper, and quaternary ammonium compounds. Monovalent copper compounds such as cuprous oxide and cuprous halide are preferable because they are particularly excellent in antimicrobial properties and antiviral properties.

The amount of the functional agent added may be appropriately set according to the functional agent to be added, but is preferably 50 mass% or less with respect to the solid content of the coating film.

In addition, various additives such as a surface conditioner can be added as necessary. When the surface conditioner is added, wettability and leveling properties when the resin composition is applied to the woven fabric substrate are enhanced, and a coating film having a more uniform surface is obtained.

### (Thickness of coating film)

The thickness of the coating film of the fiber assembly of the present embodiment is not particularly limited, and may be appropriately adjusted according to the purpose of use of the fiber assembly. When the fiber assembly of the present embodiment is configured so as to be bent and used, the thickness thereof desirably does not exceed 500 nm. When the coating film has a thickness of 500 nm or less, defects of the coating film are less likely to occur even when the fiber assembly of the present embodiment is bent and used, as compared with the case where the thickness is out of the range.

### (Method for forming coating film)

As a method for forming a coating film on the surface of a substrate such as a woven fabric, for example, a known method can be applied. Specifically, for example, the coating film can be produced through a step of producing a resin composition, a step of applying the resin composition to a substrate such as a woven fabric, and a step of curing the applied resin composition.

### (1) Step of preparing resin composition

The resin composition is prepared by a known method. For example, respective components of the curable resin, optionally, a functional agent are further mixed using a commonly used mixing apparatus such as a ball mill to obtain a resin composition. The resin composition is dissolved or dispersed in a solvent to prepare a varnish to be used in the coating step. The solvent for dissolving the resin composition is not particularly limited, and may be appropriately selected according to the components contained in the resin composition and the type of the woven fabric substrate to be coated. Examples of the solvent include aromatic solvents such as toluene and xylene; ketone-based solvents such as methyl ethyl ketone, acetone, methyl isobutyl ketone, and cyclohexanone; ether-based solvents such as diethyl ether, isopropyl ether, tetrahydrofuran, dioxane, ethylene glycol dimethyl ether, ethylene glycol diethyl ether, diethylene glycol dimethyl ether, diethylene glycol diethyl ether, propylene glycol monomethyl ether, anisole, and phenetole; ester-based solvents such as ethyl acetate, butyl acetate, isopropyl acetate, and ethylene glycol diacetate; amide-based solvents such as dimethylformamide, diethylformamide, and N-methylpyrrolidone; cellosolve-based solvents such as methyl cellosolve, ethyl cellosolve, and butyl cellosolve; alcohol-based solvents such as methanol, ethanol, propanol, isopropyl alcohol, butanol, and isobutyl alcohol; and halogen-based solvents such as dichloromethane and chloroform. These may be used singly or in combination of two or more kinds thereof. Among them, an ester-based solvent, an ether-based solvent, an alcohol-based solvent, and a ketone-based solvent are preferable in the coating step.

### (2) Coating step

The varnish prepared in the step of preparing a resin composition is applied to a substrate such as a woven fabric. The coating method may be a known method, and is not particularly limited. Examples of the coating method include a dip coating method, an air knife coating method, a curtain coating method, a roller coating method, a bar coating method, a die coating method, and an inkjet method. After the coating, a drying treatment is performed to remove the solvent contained in the varnish. The drying temperature is not particularly limited, and may be set to conditions known to those skilled in the art according to the application amount, the type of the solvent, and the type of the curable functional group of the curable resin. Specifically, the solvent may volatilize at a temperature that does not exceed the melting point of the woven fabric or the like as a substrate, and the curing reaction of the curable resin does not start in the drying step. For example, the temperature may be appropriately set between 50°C and 150°C.

### (3) Curing step

The woven fabric or the like coated with the resin composition is heated or irradiated with an active energy ray to thereby perform curing. The heating temperature in the case of thermal curing may be determined according to the type of the cured resin in the resin composition as long as it does not exceed the melting point of the substrate such as a woven fabric. From the viewpoint of further suppressing a temporal change in coloring or the like, the curing reaction of the coating film is preferably allowed to proceed as completely as possible. The degree of progress of curing can be confirmed by a method known to those skilled in the art, such as measuring the spectral intensity of the curable functional group or measuring the gel fraction.

When curing is performed by irradiation with an active energy ray, the type of the active energy ray is not particularly limited. The active energy ray is appropriately selected according to the type of polymerizable monomer or oligomer. The active energy ray is not particularly limited, and examples thereof include an ultraviolet ray, an electron beam, and ionizing radiation such as an α ray, a β ray, and a γ ray. Among them, an electron beam is preferable because polymerization is easily performed without adding a polymerization initiator. The irradiation amount may be an irradiation amount in a range such that the resin composition is cured and the organic substance constituting the coating film does not deteriorate. For example, the resin composition may be irradiated with an active energy ray having an integrated light quantity of 200 mJ/cm² or more and 400 mJ/cm² or less in the case of ultraviolet irradiation, or an active energy ray with a dose of 50 kGry or more and 150 kGry or less in the case of electron beam irradiation.

Here, the coating film of the fiber assembly of the present embodiment has a Martens hardness of 200 N/mm² or more and less than 230 N/mm² as measured at a maximum indentation depth of 100 nm or less, but the Martens hardness of the coating film can be adjusted by controlling the type, blending ratio, and the like of the curable resin as described above.

For example, when the composition of the curable resin is set so that the number of curable functional groups in 100 g of the curable resin is 0.12 mol or more and 0.32 mol or less, a coating film having a Martens hardness of 200 N/mm² or more and less than 230 N/mm² can be obtained. The number of curable functional groups in the curable resin can be calculated from the curable functional group equivalent of the curable resin constituting the composition and the blending ratio thereof.

When the Martens hardness of the coating film on a substrate such as a woven fabric is set to 200 N/mm² or more and less than 230 N/mm², removal of the coating film due to rubbing can be suppressed. Therefore, for example, when a functionalizing agent such as an antimicrobial agent or antiviral agent is contained in the coating film and such a coating film is applied to a substrate such as a woven fabric, removal of the functionalizing agent due to rubbing is suppressed, and thus deterioration of desired functions such as antimicrobial properties and antiviral properties due to rubbing can be suppressed.

### (Measurement of coating film hardness)

The coating film hardness of the fiber assembly of the present embodiment can be calculated in conformity with ISO14577-1 by measuring the force applied to a coating film on a fiber such as a woven fabric and the indentation depth with a Vickers indenter using an ultra-microhardness tester, for example, a dynamic ultra micro hardness tester DUH-211 (manufactured by Shimadzu Corporation).

### (Scratch resistance test)

The resistance to breakage or removal of the coating film due to rubbing of the fiber assembly of the present invention can be confirmed, for example, by rubbing the fiber assembly a predetermined number of times with a brush or the like and observing a change in the appearance of the coating film. Specifically, the resistance can be confirmed, for example, by performing a rubbing test described in Examples of the present specification.

As described above, according to the present embodiment, in the woven fabric or the nonwoven fabric, it is possible to suppress defects due to rubbing of the coating film on the surface thereof, so that the strength of the coating film against rubbing can be enhanced.

### Examples

### [Example 1]

A fiber assembly of Example was produced through the following steps of coating agent preparation, coating, and electron beam irradiation.

### (Preparation of coating agent)

65 parts by mass of butyl acetate, 31 parts by mass of UNIDIC V-6850 (manufactured by DIC Corporation, weight average molecular weight: 26,000), and 4 parts by mass of trimethylolpropane triacrylate (TMPTA, manufactured by Daicel-Allnex Ltd.) were weighed and uniformly stirred in a beaker to obtain a coating agent sample.

Next, 40 parts by mass of ethanol and 60 parts by mass of propylene glycol ether were mixed to obtain a diluent.

### (Coating method)

Coating was performed by a dipping method using mesh TESP70SS (manufactured by NBC Meshtec Inc.) of a PET substrate as a substrate.

In a stainless square tray, 100 mL of a liquid obtained by diluting the coating agent sample 50 times with a diluent was placed. After immersion in this diluted liquid, the excess liquid was scraped off at the edge of the tray, followed by drying with a multi-safety dryer MSO-60TPS (manufactured by Futaba Scientific Co., Ltd.). The temperature of the drying furnace was 120°C, and the drying time was 2 minutes. The number of the curable functional groups in 100 g of the curable resin of the obtained coated mesh of Example 1, which is a fiber assembly, is 0.24 mol.

### (Electron beam irradiation)

Electron beam irradiation was performed using an electron beam irradiation device ERECTOROBEAM-L EC250/15/180L (manufactured by Iwasaki Electric Co., Ltd.). Irradiation was performed under the conditions of an accelerating voltage of 150 kV, an electron flow of 5 mA, and a dose of 110 kGy.

### [Example 2]

A coated mesh of Example 2 as a fiber assembly was obtained by performing the same operations as those of Example 1 except that 31 parts by mass of UNIDIC V-6850 (manufactured by DIC Corporation, weight average molecular weight: 26,000) of Example 1 were changed to 15 parts by mass of UNIDIC V-6850 and 13 parts by mass of ART RESIN UN-954 (manufactured by Negami Chemical Industrial Co., Ltd, weight average molecular weight: 4,000). The number of the curable functional groups in 100 g of the curable resin of the obtained coated mesh is 0.31 mol.

### [Example 3]

A coated mesh of Example 3 as a fiber assembly was obtained by performing the same operations as in Example 1 except that 31 parts by mass of UNIDIC V-6850 in Example 1 were changed to 26 parts by mass of ART RESIN UN-952 (weight average molecular weight: 8,000, manufactured by Negami Chemical Industrial Co., Ltd.), and 4 parts by mass of trimethylolpropane triacrylate (TMPTA, manufactured by Daicel-Allnex Ltd.) were changed to 4 parts by mass of phenoxydiethylene glycol acrylate (EBECRYL 110, manufactured by Daicel-Allnex Ltd.). The number of the curable functional groups in 100 g of the curable resin of the obtained coated mesh is 0.18 mol.

### [Comparative Example 1]

A coated mesh of Comparative Example 1 as a fiber assembly was obtained by performing the same operations as those of Example 1 except that 4 parts by mass of trimethylolpropane triacrylate (TMPTA, manufactured by Daicel-Allnex Ltd.) of Example 1 were changed to 4 parts by mass of phenoxydiethylene glycol acrylate (EBECRYL 110, manufactured by Daicel-Allnex Ltd.). The number of the curable functional groups in 100 g of the curable resin of the obtained coated mesh is 0.11 mol.

### [Comparative Example 2]

A coated mesh of Comparative Example 2 as a fiber assembly was obtained by performing the same operations as in Example 1 except that 65 parts by mass of butyl acetate in Example 1 was changed to 70 parts by mass, 31 parts by mass of UNIDIC V-6850 (manufactured by DIC Corporation, weight average molecular weight: 26,000) was changed to 26 parts by mass of ART RESIN UN-954 (manufactured by Negami Chemical Industrial Co., Ltd., weight average molecular weight: 4,000), and 4 parts by mass of trimethylolpropane triacrylate (TMPTA, manufactured by Daicel-Allnex Ltd.) was changed to 4 parts by mass of M-305 (manufactured by Toagosei Co., Ltd., molecular weight: 319.6). The number of the curable functional groups in 100 g of the curable resin of the obtained coated mesh is 0.33 mol.

The coated meshes of Examples and Comparative Examples were subjected to the following Martens hardness test and rubbing test.

### (Martens hardness test)

Using a dynamic ultra micro hardness tester DUH-211 (manufactured by Shimadzu Corporation), a Martens hardness test was conducted based on the Martens hardness in the instrumented indentation hardness (ISO14577-1) of the ISO standard.

The sample was bonded and fixed on a glass plate as pretreatment, and a test was conducted under the measurement conditions described in Table 1.

The average value of five measurements was taken as the result.

**[Table 1]**

| Type of test | Loading-unloading test |
|---|---|
| Surface detection | Soft surface detection mode |
| Maximum test pressure (mN) | 0.10 |
| Minimum test force (mN) | 0.002 |
| Loading speed (mN/sec) | 0.0050 |
| Loading retention time (sec) | 2 |
| Unloading retention time (sec) | 0 |
| Measurement indenter | Angle between edges of indenter 115° diamond triangular pyramid indenter (Berkovich) |
| Number of measurements | 5 |

### (Rubbing test)

A rubbing test was conducted on the coated meshes of Examples 1 to 3 and Comparative Examples 1 and 2 under the following conditions.

An air purifier/air conditioner brush BA665 (manufactured by AZUMA Industrial Co, Ltd) was attached to a shaker. A coated mesh as a sample was fixed to a glass plate with a tape on the upper and lower sides, and the glass plate was set at a position in contact with a brush to perform a test. The shaker was operated at 120 rpm for 8 minutes and 30 seconds.

The coating appearance of the coated mesh after the rubbing test was observed by SEM, and the presence or absence of defects of the coating film was confirmed.

The compositions of the coated meshes of Examples and Comparative Examples are summarized in Table 2. The results of the Martens hardness test and the rubbing test are shown in Table 3.

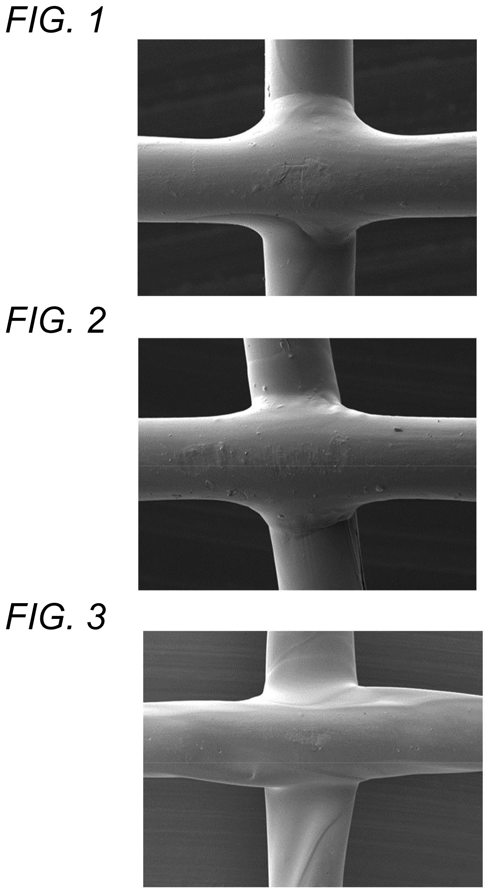

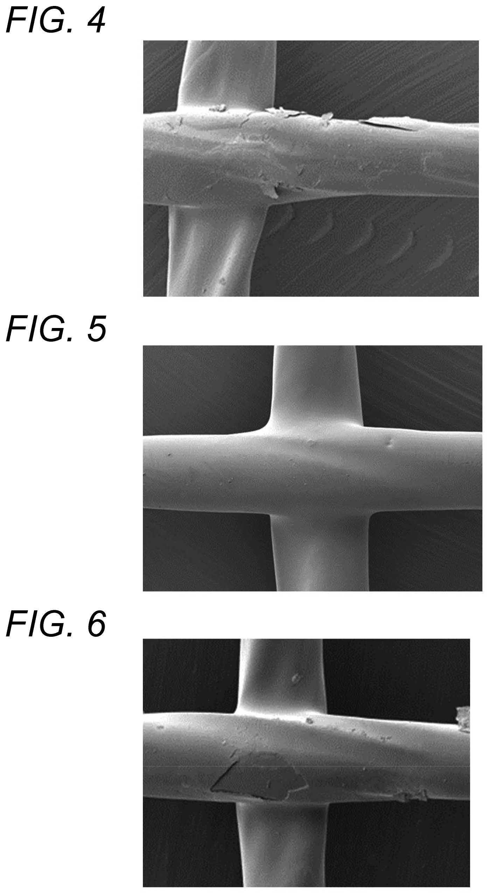

For the coated mesh of Example 1, a photograph before the rubbing test is shown in Fig. 1, and a photograph after the rubbing test is shown in Fig. 2. Similarly, photographs before and after the rubbing test are shown for the coated meshes of Comparative Examples 1 and 2 (Comparative Example 1 before test: Fig. 3, after test: Fig. 4, Comparative Example 2 before test: Fig. 5, after test: Fig. 6).

**[Table 2]**

| | UN-952 | UN-954 | V-6850 | M-305 | EBECRYL 110 | TMPTA |
|---|---|---|---|---|---|---|
| Example 1 | 0 | 0 | 31 | 0 | 0 | 4 |
| Example 2 | 0 | 13 | 15 | 0 | 0 | 4 |
| Example 3 | 26 | 0 | 0 | 0 | 4 | 0 |
| Comparative Example 1 | 0 | 0 | 31 | 0 | 4 | 0 |
| Comparative Example 2 | 0 | 26 | 0 | 4 | 0 | 0 |

| | | | | | | |
|---|---|---|---|---|---|---|
| Unit: parts by mass | | | | | | |

**[Table 3]**

| | Martens hardness (N/mm²) | Maximum indentation depth (nm) | Maximum test force (mN) | Presence or absence of coating film defects in rubbing test |
|---|---|---|---|---|
| Example 1 | 209.9 | 78.1 | 0.10 | Absent |
| Example 2 | 226.2 | 74.3 | 0.10 | Absent |
| Example 3 | 200.4 | 80.8 | 0.10 | Absent |
| Comparative Example 1 | 196.5 | 83.2 | 0.10 | Present |
| Comparative Example 2 | 239.9 | 70.7 | 0.10 | Present |

As can be understood from Table 3, in the coated meshes of Examples 1 to 3, defects of the coating film due to rubbing were suppressed.

## Claims

1. A fiber assembly in which at least a part of a surface of the fiber assembly is coated,
the fiber assembly comprising:
a substrate made of a woven fabric, a knitted fabric, or a nonwoven fabric; and
a coating film covering at least a part of the surface of the substrate, wherein
a Martens hardness of the coating film measured at a maximum indentation depth of 100 nm or less is 200 N/mm² or more and less than 230 N/mm².

2. The fiber assembly according to claim 1, wherein the coating film contains a functional agent.

3. The fiber assembly according to claim 2, wherein the functional agent is an inorganic material.

4. The fiber assembly according to claim 2, wherein the functional agent is an antimicrobial agent and/or an antiviral agent.

5. The fiber assembly according to any one of claims 1 to 4, wherein the coating film contains an acrylic resin.

6. The fiber assembly according to any one of claims 1 to 4, wherein the coating film has a thickness of less than 500 nm.

7. A method for enhancing strength against rubbing of a coating film formed on a woven fabric, a knitted fabric, or a nonwoven fabric,
the method comprising setting a composition of a resin constituting the coating film such that a Martens hardness measured at a maximum indentation depth of 100 nm or less of the coating film is 200 N/mm² or more and less than 230 N/mm².
